# EUROPEAN PATENT SPECIFICATION

(11) **EP 0 619 938 B1**
(45) Date of publication and mention of the grant of the patent: **07.07.1999**
(21) Application number: 94200934.1
(22) Date of filing: 06.04.1994
(51) Int. Cl.: A01B 73/04, A01C 7/08

(54) **A soil cultivating machine**
Bodenbearbeitungsmaschine
Machine pour cultiver le sol

(30) Priority: 14.04.1993 NL 9300630; 05.07.1993 NL 9301170
(43) Date of publication of application: 19.10.1994
(73) Proprietor: MAASLAND N.V., 3155 PD Maasland (NL)
(72) Inventor: Bom, Cornelis Johannes Gerardus, NL-3181 VC Rozenburg (NL); Haaring, Arie, NL-3155 BP Maasland (NL); Tollenaar, Eduard, NL-2905 VR Capelle a/d IJssel (NL)
(74) Representative: Corten, Maurice Jean F.M.

(56) References cited:
- EP-A- 0 475 480
- EP-A- 0 478 095
- DE-A- 2 519 760

## Description

The present invention relates to a soil cultivating machine comprising at least two frame portions aligned horizontally and substantially perpendicular to the direction of operative travel during operation and pivotable towards a transport position wherein the frame portions are arranged-side-by-side in upward direction, in each of which frame portions soil working members are accommodated and to each of which a pneumatic seed drill is coupled by means of a pivotal connecting structure, which seed drill includes, connected to a carrier, seed delivery members for depositing seeds in the soil and at least one distributor member, the machine further comprising an adjusting element for rotating the carrier.

Such a machine is known from the European Patent Application 0 478 095. In the machine according to this document a pneumatic seed drill is mounted to a frame portion by means of a connecting structure. Upon folding the frame portions towards vertically orientated transport positions the seed distributor member of the known machine is pivoted forwardly relative to a carrier beam for the seed delivery members. The present invention has for its object a further optimalization of the known machine.

According to the invention this is achieved in that the pivotal connecting structure comprises a lower element and an upper element, which upper element is pivotally connected to an upwardly extending support by which a distributor member is arranged on the carrier, said support comprising two upwardly extending portions, which are pivotal relative to each other about a transverse axis, the lower most portion being connected to the carrier, the adjusting element being arranged to rotate the carrier, such that upon actuation of the adjusting element the seed delivery members are pivoted upwardly away from a working position near soil level, and the distributor member is pivoted from an upright working position rearwardly and downwardly relative to the carrier. In this way the seed delivery members are lifted still further away from the soil than is already achieved in the known machine through the lifting of the relevant frame portion.

The construction has the advantage that when the frame portions of the machine are folded to its upwardly directed positions, which is made possible through the rearward deflection of the distributor member, the outer ends of the seed delivery members are deflected inwardly relative to the frame portions, so that behind a carrying tractor somewhat more manoeuvring space is achieved.

The European Patent Application 0 513 939 discloses a machine of the above kind wherein the seed drill is mounted to a roller belonging to the machine. In this machine a hydraulical cylinder is present for pivoting the seed delivery members away from their working position, whereas a manually operable adjusting element is present for pivoting the distributor member rearwardly.

In an advantageous embodiment of the invention, the carrier is coupled to the frame and the pivotal motion occurs automatically.

It is also advantageous, according to the invention, when the upper element constructed as a spacer element is pivotally arranged between the frame and the upper portion of the holder of a distributor member.

In a specific embodiment in accordance with the invention, the frame is connected via a four-bar linkage which approaches a parallelogram, by means of two arms which predominantly extend in the direction of operative travel to a main frame which is couplable to a tractor. In this situation, in accordance with the invention, it is advantageous that the centre-to-centre distance between the pivot shafts of the upper arm is less in a range from 5 to 15%, and preferably 10%, than the corresponding distance of the lower arm. Such a construction contributes to the fact that the seed delivery members, for example when the machine makes a turn on the head field, are pivoted to a sufficiently great height above the soil surface, in order to prevent, when the tractor passes over unevennesses, the seed delivery members from being damaged or distorted.

In a further advantageous construction in accordance with the invention, the leading pivot shafts of the four-bar linkage are located at the leading side of an imaginary vertical plane of contact with the trailing side of a main frame beam to which the four-bar linkage is connected, and the rear and lower pivot shaft of the four-bar linkage is accommodated near the leading edge of a frame portion. This provides a compact, but advantageous coupling of the frame portion. Preferably, in a transport position, the arms of the four-bar linkage then enclose, in accordance with the invention, rearwardly an acute angle with a horizontal, which angle is preferably approximately 45°.

According to an embodiment of the invention, the main frame portion includes the central main frame portion for coupling the machine to a tractor and two peripheral main frame portions which are each disposed at one side thereof and can each be pivoted with the aid of an hydraulic adjusting cylinder about a pivot shaft extending in the direction of operative travel to an at least predominantly upwardly directed transport position. In this situation, in accordance with an embodiment of the invention, the hydraulic circuit of the adjusting cylinders for the main frame is connected via non-return valves to the hydraulic circuit for the adjusting cylinders which act on the carrier of the seed drill, the construction being such that on activation of the adjusting cylinders for adjusting the machine to the transport position, the adjusting cylinders for the seed drill are activated automatically and at the same time.

For a better understanding of the invention and to show how the same may be carried into effect, reference will now be made, by way of example, to the accompanying drawings, in which:
Figure 1 is a schematic plan view of the machine in accordance with the invention, in the state in which it is coupled to the lifting device of a tractor;

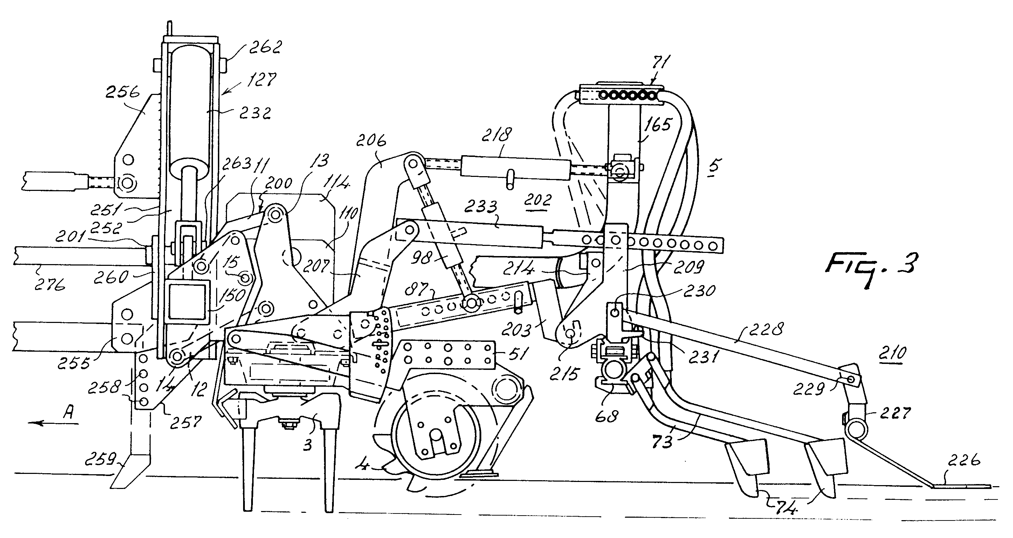

Figure 2 is a schematic rear view of the machine taken in the direction of the arrow II in Figure 1, and illustrates by means of broken lines the transport position of the machine;
Figure 3 is a side view of the machine taken in the direction of the arrow III in Figure 1;
Figure 4 is a side view of a cut-out portion of a first part of the construction for connecting the carrier of the seed drill of the machine, taken on the line IV-IV in Figure 1;
Figure 5 is a side view of a cut-out portion of a second construction for connecting the carrier of the seed drill of the machine, taken on the line V-V in Figure 1;
Figure 6 is a schematic view of the hydraulic circuit of the machine in accordance with the invention;
Figure 7 is a front view of the central main frame portion and a portion of the peripheral frame portions connected thereto, of the main frame;
Figure 8 is a plan view of a part of a peripheral main frame portion which, in accordance with an alternative embodiment, is provided with supporting members;
Figure 9 is a plan view of an embodiment of the machine in accordance with the invention, in which the markers for the seed drill are disposed on the frame for the soil working members, and
Figure 10 is a rear view of the marker implement of Figure 9.

Corresponding components in the drawings have been given the same reference numerals. In addition, the invention is is no way limited to the embodiments shown and described here; they only serve by way of illustration of the inventive idea.

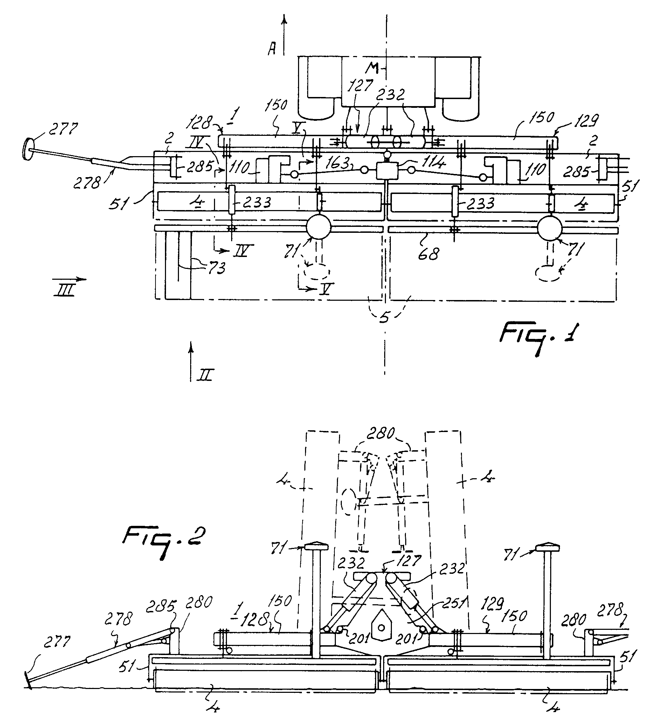

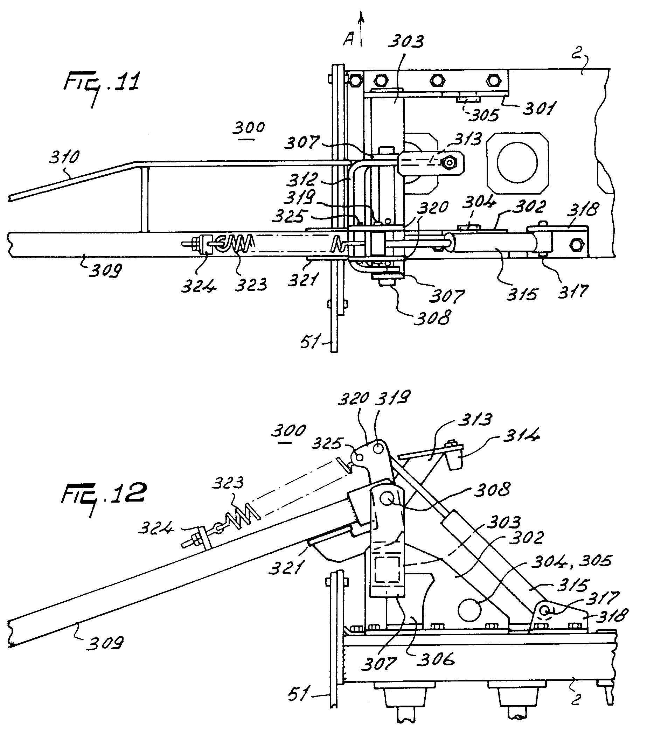

Figure 1 shows schematically a p.t.o.-driven harrow as described more in particular in the embodiments relating to Figures 9 - 16 of European application EP-A-0475480.

The present machine includes inter alia two frame portions 2, in each of which a drivable row of soil working members 3 is accommodated. At their rear sides, the frame portions 2 bear on the soil by means of a roller via a so-called floating construction, which roller is coupled to a frame portion 2 via arms 51. At their leading sides, the frame portions 2 are each coupled to a main frame 127 - 129 via a pair of four-bar linkages 200 which approach a parallelogram. The main frame includes a central main frame portion 127 which comprises a trestle with pairs of lugs for coupling the machine to the three-point lifting device of a tractor. On both sides of the central main frame portion 127 there are present respective peripheral main frame portions 128 and 129 which are pivotal about a shaft 201 which extends in the direction of travel and to each of which a frame portion 2 is coupled via the said parallelogram structure 200. Secured to the central frame portion 127 there are, arranged one each at one side of the three-point trestle, two pulling cylinders 232, which act by means of their piston rod on the frame beam 150 of a peripheral main frame portion 128, 129 and can cause this frame beam to pivot to a transport position about the pivot shaft 201. Attached to the central main frame portion 127 there is a central transmission box 114, which can be coupled via a coupling shaft 276 to the power take-off shaft of a tractor. The central transmission box 114 is in connection via coupling shafts 163 with transmission boxes 110 mounted on the frame portions 2, from where the soil working members 3 are driven via gearwheels accommodated in the frame portion 2.

A seed drill 5 is coupled to the machine near the rear side of a frame portion 2, via a connecting structure 202. The seed drill includes a carrier 68 which extends transversely to the direction of operative travel A, and parallel to a row of soil working members 3. A distributor member 71, seed delivery members 73 and a coverer member 210 are coupled to the carrier 68. In this situation, the seed delivery members 73 and the coverer member 210 extend in a predominantly rearward direction from the carrier 68. The seed delivery members 73 are provided with a seed coulter 74, but, if so desired, they may alternatively be constituted by open-ended seed pipes which end over the seed bed. A broken line in Figure 1 illustrates a position of the distributor member 71 in which it is pivoted to the rear from a pivot point near the carrier 68. Such a pivotal motion is necessary for dimensional reasons when the machine is pivoted to the transport position about the pivot shafts 201.

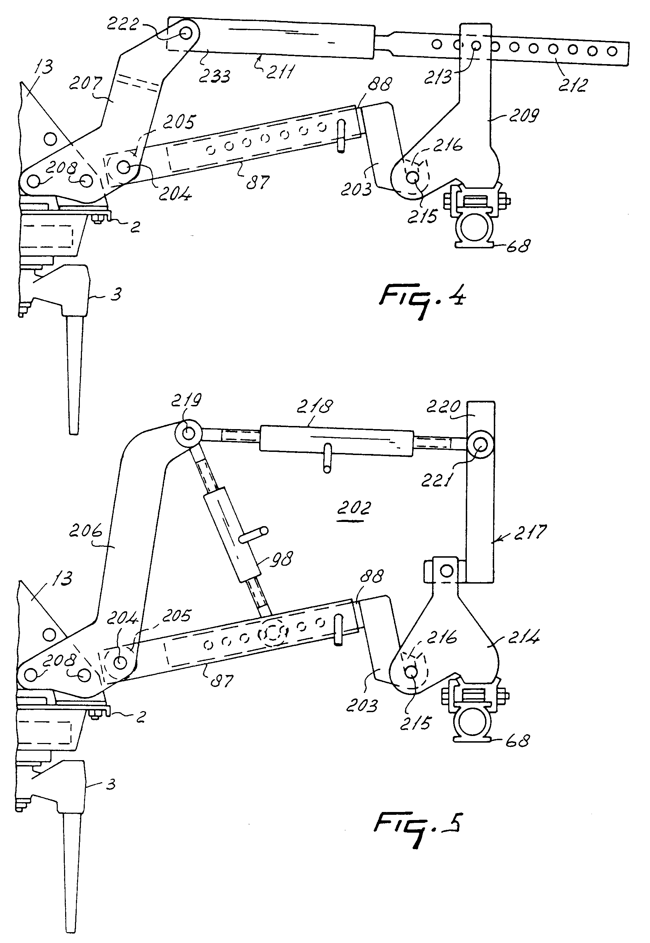

Figure 3 shows in a side view of the machine in accordance with the invention inter alia a connecting structure 202. The connecting structure 202 includes inter alia one pair of telescopically slidable lower arms 87 having a slidable portion 88, to the end of which a hook 203 is fastened. The lower pair of arms 87 are interconnected via a connecting tube 205 which is arranged concentrically relative to the leading pivot shaft 204 of an arm 87 and extends transversely to the direction of travel. The two arms 87 are each pivotally connected to predominantly upwardly extending holder plates 206 and 207, respectively, via which the connecting structure 202 is connected to a frame portion 2. For the benefit of this connection, a holder plate 206 and 207 is provided with bores 208 for a screwed connection to one of two connecting plates, or supporting elements 13, which extend upwardly and in the direction of travel through the entire width of a frame 2. Between a holder 207 and a likewise upwardly directed and plate-like rearmost holder 209 (see Figure 4) for the carrier 68 there extends a second and upper arm 211 of the four-bar linkage 202, which arm extends in the direction of travel. The arm 211 comprises an adjusting cylinder 232, to whose plunger rod a strip-like extension 212, provided with bores, is connected. Via one of these bores, the upper arm 211 is pivotally connected about a pivot shaft 213 of the holder plate 209. At the leading end, the arm 211 is pivotal about a shaft 222. At the leading side of the carrier 68, the holder plate 209 is provided with a tap 215, by means of which the holder plate 209 is arranged pivotally in the hook 203. The holder plate 214 is locked in the hook 203 with the aid of a locking plate 216 which is pivotally connected to the hook 203.

A likewise predominantly upwardly directed holder 206 is bolted to the second pair of upwardly directed holders 13 for a frame 2 (Figure 5). This holder extends in height to above the pivotal connection for the arm 211. Arranged between this holder element 206 and a second support 217 for the carrier 68 there is a spacer element 218. The support 217 is formed by a lower portion 214, whose shape predominantly corresponds to the shape of the support 209, and an upper portion 220 which constitutes a holder for the distributor member 71. The two portions 214 and 220 are directed upwardly and are pivotal relative to each other via the horizontal shaft 230 which is arranged transversely to the direction of travel. The spacer element 218 includes a threaded spindle, so that the rise pipe 165 of a distributor member 71 can always be adjusted in a vertical position. The spacer element 218 may also include an extended portion 212 with bores. It is connected at the side facing the holder element 206 via a pivot shaft 219 and at the side facing the support 217 via a pivot shaft 221. An adjusting element 98 extends, whilst both ends are pivotally connected, between one of the two holder plates 206 and 207, in the present embodiment the holder element 206, and a lower arm 87 which is connected thereto, which adjusting element includes a threaded spindle and by means of which adjusting element the four-bar linkage comprising the shafts 204, 222, 213 and 215, is fixed in position and the carrier 68 can be adjusted in height. For the benefit of the proper operation, or the setting of the height of the seed delivery elements 71 in or above the seed bed surface, the height of the carrier beam 68 relative to the frame 2 can be adjusted in height via the threaded spindle 98. In addition, the supporting elements 13 form part of the four-bar linkage 200 between a frame portion 2 and a main frame portion 128, 129. The two arms 11, 12 of a four-bar linkage always extend in the present embodiment, with some clearance, between two of such supporting elements 13. In this situation, the supporting elements 13 constitute a straight guide for the arms. The upper arm 11 of the four-bar linkage 200 is of a slightly shorter length than the lower arm, so that a frame portion 2, and consequently the roller 4 and seed drill 5 connected thereto, enclose in the lifted state an angle with a horizontal, in such a manner that on lifting of the frame portion 2 the seed drill 5 is pivoted through a greater height than the roller or the frame portion 2. The two leading pivot shafts of the four-bar linkage 200 are in the present embodiment both located in the space present at the leading side of a vertical plane which is contiguous to the trailing side of a main frame beam 150. In this situation, one shaft is in a position above and the other shaft in a position below the frame beam 105. By means of their ends located near the main frame beam 150, the arms 11, 12 are passed between a pair of lugs 14 which extend in the rearward direction to beyond half the length of the upper parallelogram arm 11. On an imaginary circular line having a radius which is approximately equal to half the distance between the upper two pivot shafts, a pair of lugs 14 are provided with bores 15, through which a pin can be inserted, which pin serves as a stop for limiting the downward pivotal motion of a frame portion 2 relative to the main frame beam. The radius to the upper bore is at an angle of 45° to a horizontal. This upper bore is eminently suitable, in accordance with the present invention, for providing a stop for adjusting a frame portion 2 to an advantageous transport position. The upper arm 11 is further provided with a bend which in the downward direction has an open angle. The angle is located in the midway point of the upper arm 11 and, taking account of the thickness of the arm and the pin which constitutes a stop, must be such that the centre of the pivot shafts for the upper arm and the stop are in alignment when the arm bears on the stop. Since the two leading pivot shafts of the four-bar linkage 200 are placed before the rear boundary of a main frame beam 150, and the lower and rear pivot shaft is accommodated near the leading side of a frame portion 2, a wide slewing angle can be obtained with the present four-bar linkage, whilst the horizontal spacing between the main frame beam 150 and a frame portion 2 remains at a minimum.

In the present embodiment, the seed drill 5 is equipped with a coverer member 210. The coverer member 210 comprises coverer elements 226 which are connected to a carrier beam 227 which, in a side view, is arranged behind the seed delivery members 73 and which carrier beam 227 is connected to the carrier 68 via a pair of arms 228 which are pivotally connected to the carrier 68 and are connected rigidly, but capably of adjustment about a shaft 229, to the carrier beam 227. At the trailing side of the pivotal connection to the carrier 68, a stop element 231 is provided, on which the arms 228 come to bear when the machine is lifted, in such a manner that in the lifted state the coverer members project for not more than a few centimetres under the seed coulters of the seed delivery members 73. Near their connection to the carrier beam 227, the coverer elements 226 comprise a coiled spring, from where a second section of these elements extends downwardly and rearwardly and a third section extends in parallel with the surface of the seed bed and at at least an angle to the direction of operative travel A of the machine.

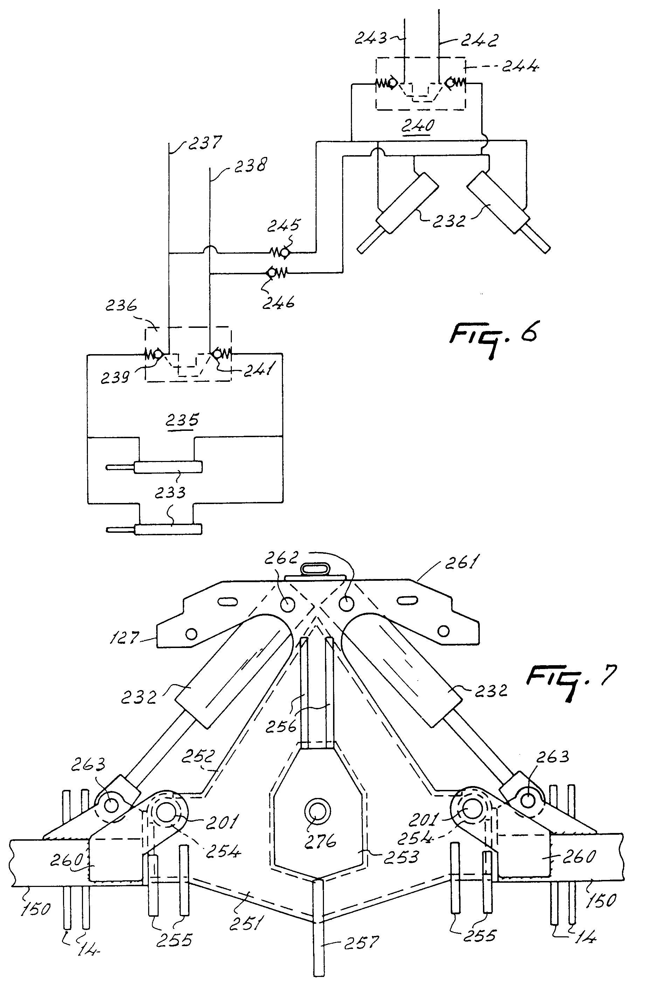

Figure 6 shows the hydraulic circuit for the adjusting cylinders 232 for adjusting the entire machine to the transport position and for the adjusting cylinders 233 for pivoting the carrier 68, i.e. lifting the seed members 73 on reversing the machine on the head field and on adjusting the machine to the transport position. The present machine has one adjusting cylinder 233 for either one of two fields to be worked, whose widths are defined by a frame portion 2. The two adjusting cylinders 233 are connected in parallel with each other in a sub-circuit 235 which can be closed and released in a hydraulic closing element 236, which interrupts the hydraulic lines 237 and 238 of the sub-circuit 235 and comprises the controlled non-return valves 239 and 241. The lines 237 and 238 act alternately as the supply and discharge line for the adjusting cylinders 233. Non-return valves 239 and 241 are provided in such a manner in the shut-off block element 236 that they block a flow from the cylinders 233 through the lines 237 and 238, via which the circuit 235 is connected to the hydraulic circuit of a tractor. By means of an internal connection in the shut-off element 236, between the non-return valve 239 and the portion of the line 238 to be connected to the hydraulic circuit of the tractor, and between the non-return valve 241 and the portion of the line 237 to be connected to the hydraulic circuit of the tractor, respectively, the non-return valves 239 and 241 can be driven to the open state as soon as pressure is applied to one of the two respective lines 238 and 237. This produces, immediately after the circuit 235 has been energized from the tractor, the required aperture for circulation of the pressure fluid. In this manner the hydraulic circuit 235 can be operated independently, but via connections to the respective lines 237 and 238 it also forms at the same time part of a circuit 240 for the adjusting cylinders 232, by means of which the circuit 235 is incorporated, arranged in parallel, in the circuit 240. Via lines 242 and 243, which alternately serve as supply and discharge lines, the circuit 240 is also connected, independently of the circuit 235, to the hydraulic circuit of the tractor. The line 242 is provided, just before the connection to the line 238, with a non-return valve which prevents the pressure fluid from energizing the hydraulic circuit 235 on adjustment of the machine from the transport position to the working position. The line 243 is also equipped, just before the connection to the line 237, with a non-return valve which relative to the non-return valve in the line 242 is arranged in the opposite direction. This prevents on the one hand, when the line 237 for pivoting the seed drill 5 from the working position is energized, the line 243 from being likewise energized, which would result in the entire machine being adjusted to the transport position on retraction of the cylinders 232. On the other hand, the above-described circuit provides the desired effect that on the return stroke of the cylinders 232, i.e. adjusting the entire machine to the transport position, the hydraulic circuit 235 is also energized, so that the adjusting cylinders 233 are retracted and consequently the seed delivery members 73 are moved from the working position and the distributor member 71 is then pivoted to the position in which it points to the rear which is an absolute must for the transport position. This last-mentioned action is necessary, because a distributor member extends through a predetermined height required for the rise pipe 165 to above a carrier 68, which height is in practice greater than, or at least almost equal to, the distance between the two carriers 68 after they have been adjusted, together with the main frame portions 128 and 129 and consequently the frame portions 2, to the transport position about the shafts 201. The maximum width of a machine, after it has been adjusted to the transport position, must not exceed the maximum width of three metres, which is the width legally prescribed in many countries, but should preferably also not be much wider than the customary width of a tractor, which in practice varies between 2.50 and 2.75 m. Therefore, when, for the benefit of making the seed delivery members 73 and the coverer member 210 inoperative, an adjusting cylinder 232 is energized, the carrier beam 68 is pivoted about the pivot shaft 215, as a result of which the pivot shaft 230 is caused to pivot in the forward direction together with the support 217, causing the distributor member 71 to be pivoted, due to the fact that it is attached to the supporting section 220, in the rearward direction about the shaft 221. This creates the required room for adjusting the machine to the transport position.

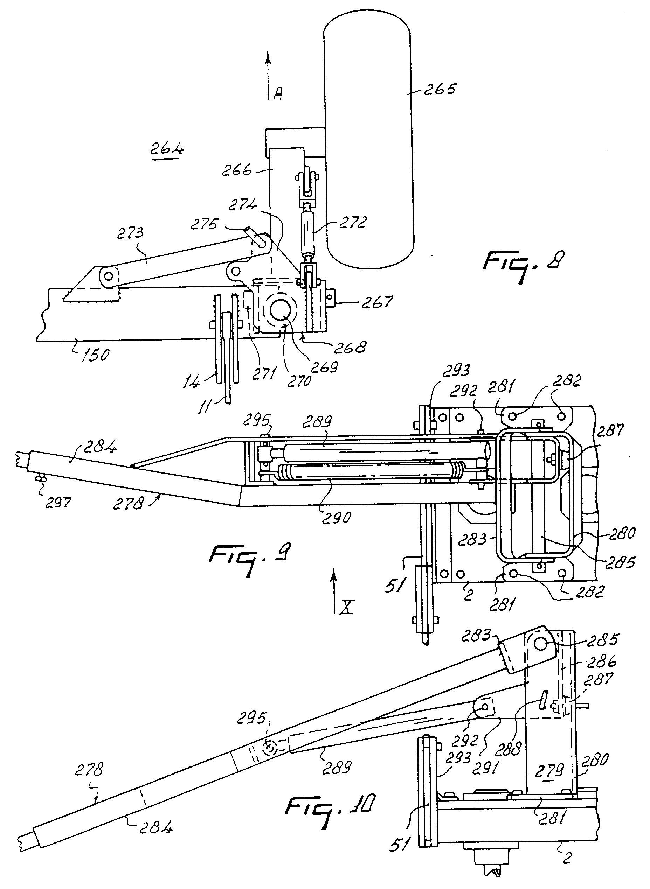

In an alternative embodiment, in which the main frame portions 128 and 129, as shown in Figure 8, are supported by a supporting member, the hydraulic circuit 240 incorporates a hydraulic shut-off element 244 in a position between the branches of the lines 242 and 243 and the connection of these lines to the tractor. The operation of this shut-off element corresponds to that of the shut-off element 236 and has for its function to block the position of the peripheral main frame portions 128, 129 once they have been adjusted, relative to the main frame portion 127. Thus, if such a shut-off element 244 were not present, it might, for example, occur that the main frame portion 127 "sags" with respect to the supported portions 128, 129, or that, taken in a front view, the main frame is bent in the shape of a V.

Figure 7 is a front view of the central main frame portion 127 which is assembled with the aid of two cut-out plate sections 251 which are arranged in parallel with each other in a direction transversely to the direction of travel. The plate sections 251 form a frame together with intermediate plate sections 252 which are arranged in the direction of travel and space the plates 251 apart and stiffen the main frame portion 127. In their midway point, the plate sections 251 are provided with an aperture 253 which is intended for the coupling shaft 276, by means of which the machine is driven from the tractor. The inner boundary of the end faces of the plate sections 252 is represented in Figure 7 by means of a broken line. In a front view, a plate 251, i.e. the central main frame portion 127, is predominantly in the shape of an arrow with a sharp point in the upward direction and a blunt point in the downward direction. The spacer and stiffening plates 252 are all secured by welding near the outer and inner edges of the plates 251, more specifically in such a manner that the plates 252 form a closed circumference along the inner edges of a plate 251 and that they are only interrupted along the outer edges at the bottom side of the main frame portion 127. Near the interfaces with the peripheral main frame portions 128 and 129, the main frame portion 127, i.e. the plates 251, form, in a front view, a rectangular and sidewardly extending member. This member accommodates at the upper side, a pivot shaft 201 which constitutes the connection of the main frame portion to a lateral frame portion 128, 129. Provided at the bottom side of this rectangular portion there are a pair of lugs 255 for the coupling of a draw bar of a three-point lifting device. Above the aperture 253, likewise at the leading side of the main frame portion 127, there are provided a pair of lugs 256 for the connection of the top rod of a three-point lifting device. The attachment thereof extends through a relatively great length from the central aperture 253 to near the point of connection of the adjusting cylinders 232. In a central position at the bottom side of the aperture 253, the leading side of the main frame portion is provided with a connecting element 257, in which bores 258 have been made, with the aid of which a soil working element 259, for example a tine of a harrow, can be connected. Such a harrow tine has for its function to work the seed bed section located between the frame portions 2. A shaft 201 is passed through a bush 254, which extends between the two main frame plates 251. A peripheral main frame portion 128, 129 is connected to the shaft 201 via a forked member 260 which encloses the main frame portion 127. At their upper side, the plates 251 have wing-like, sidewardly extending portions 261, between which the adjusting cylinders 232 are arranged such near the midway point of the main frame portion 127 that they are pivotal about a shaft 262. Near their ends, the wing-like portions 261 are provided with locking hooks for locking the machine in the transport position. The adjusting cylinders 232 extend from the midway point and the upper side of the main frame portion 127 in the downward and sideward direction and act on a pivot shaft which is passed through a pair of lips attached to a peripheral frame portion 128, 129.

Figure 8 shows a part of the machine in accordance with a construction, in which the main frame portion is supported in operation near the ends of the peripheral main frame portions 128 and 129 by a supporting member 264 via a wheel 265. The wheel 265 is connected capably of pivoting about a horizontal shaft 267 to a construction member 268 via a support 266. In this situation, the pivot shaft 267 is attached at a level below the main frame beam 150, by means of a pair of lugs to the construction member 268 which in turn is connected around a vertically directed pivot shaft 269 to the beam 150 of the main frame portion 128. To that end, a bushing 270, through which the shaft 269 is passed, is attached in the present embodiment to the end of the beam 150. The construction then encloses the bushing 270 by means of two horizontally extending plates which form a fork-like element. Between the upper horizontal plate of the construction 268 and the pivotal wheel support 266 there extends an adjusting element 272 which is in the form of a threaded spindle and is pivotal at its ends. With the aid thereof the wheel can be adjusted in height relative to the frame beam 150. The upper horizontal plate of the construction 268 is provided with a projection or arm 274 which extends obliquely forwardly and towards the centre of the machine at an angle of approximately 45°. Near the end thereof, bores are provided for the connection of a spacer element 273 which is pivotally attached to the main frame beam 150. By means of a safety catch 275 to be placed in the bores, the supporting element 264 is locked in a working position, in which the wheels 265 develop in the direction of travel A. For the benefit of the transport position, a support 264 can be pivoted outwardly and the supporting element 264 can be locked with the aid of a second, or a third bore, if so desired, in a position in which the supporting elements are preferably arranged at an angle of approximately 45°. This angle achieves that the supporting elements 264 are positioned in the transport position of the machine above the cab of a carrier supporting the machine, and that the centre of gravity of the supporting elements 264 is retained as closely as possible to the tractor.

Figures 9 and 10 illustrate an embodiment of the present construction, in which a marker implement 278 for the seed drill 5 is disposed on a frame element 2. For that purpose, the marker implement 278 includes an upwardly directed support 280, of which horizontally turned-over base portions 281 are bolted with the use of bolts 282 to the frame portion 2. In a plan view, the holder 280 is in the shape of a U, whose edges are arranged transversely to the direction of travel and whose base extends in the direction of travel. Near the upper end of the holder 280, that is to say at a height of approximately 40 cms above the frame portion 2, an arm 284 for the marker is attached via a forked element 283, in such a manner that it is pivotal about a pivot shaft 285. At the interior side of the support 280, in a direction parallel to the holder 280, a second, smaller U-shaped element 286 is disposed around the shaft 285. This second U-shaped element 286 extends in the vertical direction from the region of the pivot shaft 285 in a downward direction to approximately half the height of the support 280, and via a rubber stop or spacer element 287 bears by means of a base side extending in the direction of travel on the base face of the holder 280. The supporting element 286 can be locked in this position by means of a locking pin 288 which in the direction of travel A extends through apertures in the flanks of the holder 280 and the supporting element 286. In the region of the stop 287, the supporting element 286 has an outwardly directed projection 291, to which an adjusting cylinder 289 is pivotally attached. For lifting the marker from the working position, the adjusting cylinder 289 pivotally acts on the marker am 284. The pivot shaft 292 for the adjusting cylinder 289 is disposed in such a manner that, in the working position of the marker, the adjusting cylinder 289 can reach with adequate clearance across the end plate 293 of the frame portion 2 and the arm 51, connected pivotally thereto, for the roller 4. The pivot shaft 292 is at the same time arranged at such a distance at the exterior side of the pivot shaft 285 that, in the inactive state, the am 284 is directed upwardly and slightly towards the centre line M of the machine. Arranged parallel to the adjusting cylinder 289, between the pivot shaft 292 and the pivot shaft 295, there is a spring element 290, with the aid of which the arm 284 can be adjusted against a slight hydraulic pressure in the adjusting cylinder 289, from an inactive to an active working position. For adjusting the marker implement 287 to the transport position, the locking pin 288 must be removed, whereafter the arm 284 can be adjusted together with the adjusting cylinder 289 and the supporting portion 286 about the pivot shaft 285 towards the centre line M of the machine. The arm 284 then arrives in a substantially horizontal position over the frame portion 2, that is to say before the entire machine can be adjusted to the transport position about the pivot shafts 201. For the benefit of this transport position, the arm 284 is of such a construction that it has three telescopic stages. In operation, the arm 284 is in the extended state and, to enable an advantageous transport position, must be telescoped in. The arm 284 can be adjusted to a plurality of telescoped-out states with the aid of locking elements 297, which may be in the form of a pin which extends through bores in the arm or as a boltable clamping element. The drawings show only one clamping element of these locking elements 297.

Figures 11 - 13 show a second embodiment of the present construction, in which a marker implement 300 for the seed drill 5 is accommodated on a frame portion 2. The entire structure is attached thereto via a supporting structure which in the present embodiment comprises the plates 301 and 302, which extend upwardly and transversely to the direction of travel. These plates are interconnected at some height above the frame portion 2 by a connecting element 303 which at the same time serves as a carrier for two spaced-apart supports 307. The supports 307 are provided with bores for accommodating a pivot shaft 308, by means of which a forked portion 312 of the marker arm 309 is pivotally connected to the supporting structure. The width of the forked portion exceeds half the width, measured in the direction of travel, of a frame portion 2. The carrier 303 consequently extends beyond one side of a frame portion 2, extending transversely to the direction of travel. Approximately in the region of the rearmost edge of the frame portion 2, an arm 309 for a marker 326 is connected to the fork. The arm 309 and its connection by means of the forked portion 312 is stiffened with the aid of a reinforcing structure 310 which includes a strip which has one end connected to the facing side of the forked portion 312 and its other end to the longitudinal centre of the arm 309. In the present embodiment, the strip 310 extends to approximately halfway its length in parallel with the arm 309 and is also connected at that height to the arm 309 via a spacer element. That arm of the fork 312 that is located near the midway point of the carrier 303 is provided with an extension 313 for a stopping element 314 constituted by an elastic rubber element. The extension 313 is disposed at an angle to the arms of the fork 312, more specifically in such a manner that, after having compressed the rubber element 314, the arms 309 are adjusted to an angle of approximately 15°. For rendering a marker 326 inoperative, the marker implement includes an adjusting element 315 constituted by a single-acting lifting cylinder which acts on the arm 309 via a rocker 320. The rocker 320 has a lever function between the cylinder 315 and the arm 309 and, seen in a side view, is in the shape of a J. The rocker 320 is formed by two J-shaped plates which are interconnected at a predetermined distance from each other inter alia via a stop plate 321 and a connecting pin 325. At the inner side of the fork 312, the rocker 320 is pivotally disposed on the shaft 308. The shaft 308 is provided with bores for receiving locking pins, by means of which the rocker is locked against sliding along the shaft 308. The stop plate 321 is positioned against the lower ends of the J-shaped plates, in such a manner that the plate 321 extends in the direction of travel and in a direction parallel to the arm 309. The cylinder 315 is connected to the rocker 320 via a pivot shaft 319 provided at the upper end of the J-shaped plates. The adjusting cylinder 315 has its other end placed around a pivot shaft 317 which extends in the direction of travel and is disposed against an upwardly folded portion of a support 318 which is bolted to an edge of the frame portion 2. The upper end of the rocker 320 is further connected to the arm 309 via a tension spring 323. For that purpose, the arm is provided at some distance from the shaft 308 with an eye 324. By means of the other, interiorly located end, the spring 323 is hooked to a connecting pin 325 arranged between the J-shaped plates. The upright carrier plates 301 and 302 are further provided with a bore 304 and a recess 306. The bore 304 has for its object to pivotally accommodate an arm for a side plate of the soil cultivating machine, whereas the recess 306 provides room for a stop disposed on the arm of a side plate to move in.

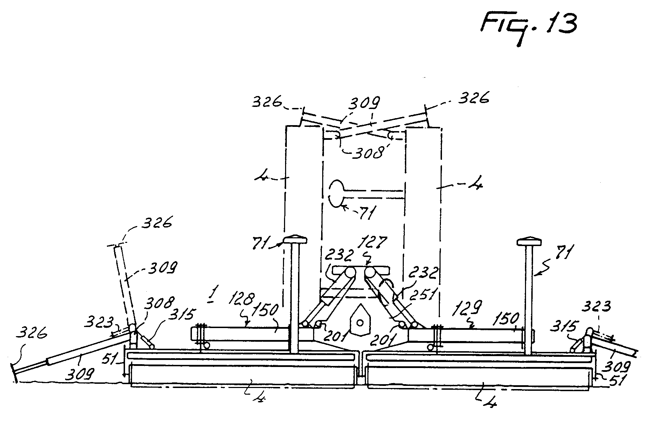

Figure 13 shows a marker at the left-hand side of the drawing in both an operative and in a non-operative position, the latter being indicated by means of a broken line. In the inoperative position, the cylinder 315 is completely retracted and the buffer-element 314 is completely depressed. On lowering of a marker, the buffer 314 provides energy for an initially outward pivotal motion of the arm 309 which thereafter, under the action of the force of gravity, moves to the operative position. The downward motion of the arm 309 is damped in the hydraulic system of the marker implement. This hydraulic system comprises a pressure-change responsive switching element for lifting or lowering a marker 326. The switching element of the trade mark Cross, type Cross sequence valve, also includes a connection to the lifting cylinders 233 for the seed drill. Using the switching element, which is not shown in the drawings, achieves that in the operative position of the seed drill 210 one of the two markers 326 is always in an operative position, whilst the other marker is kept in an inoperative postition. This also achieves that on lifting the seed drill 210 with the aid of the cylinders 233 both markers are adjusted to an inoperative position. In the inoperative position, the arms 309 are at such an angle to the vertical through the shaft 308 that in the telescoped-in state of the arm 309 a marker 326 just stays at the exterior side of a vertical line through the most outwardly extending portion of the frame portion 2, in the present case a side plate. The marker implement 300 is designed such that in an unchanged state it can be disposed on a frame portion 2 on both the left-hand and the right-hand end of the machine. Since the marker arms 309, contrary to the embodiment shown in Figures 9 and 10, are straight arms, they can pass freely along each other on lifting of the machine, as is illustrated in Figure 13 by means of broken lines. All this is the result of the fact that the am 309 is in an off-centre position, more in particular even near an end of a carrier 303, so that, when the left-hand marker arm 309 is arranged near the rearmost edge of the frame portion 2, the marker arm 309 at the right-hand end of the machine is in a position near the leading edge of a frame portion 2, and vice versa. This creates sufficient room between the two marker arms 309 to allow, when the machine is pivoted upwardly, the markers 326 to pass each other. In order to prevent during operation hydraulic pressure changes from occurring in the cylinder 315 caused by an upward motion of the arm 309, for example when obstacles are met, the tension spring 323 is provided between the rocker 320 and the arm 309. This prevents sudden and unwanted alterations of the marker position during operation.

The invention further relates to all kinds of alternatives of the construction, of course falling within the wordings of the following claims.

## Claims

1. A soil cultivating machine comprising at least two frame portions (2) aligned horizontally and substantially perpendicular to the direction of operative travel during operation and pivotable towards a transport position wherein the frame portions are arranged side-by-side in upward direction, in each of which frame portions (2) soil working members (3) are accommodated and to each of which a pneumatic seed drill (68 - 74) is coupled by means of a pivotal connecting structure (202), which seed drill includes, connected to a carrier (68), seed delivery members (73, 74) for depositing seeds in the soil and at least one distributor member (71), the machine further comprising an adjusting element (233) for rotating the carrier (68), characterized in that the pivotal connecting structure (202) comprises a lower element (87) and an upper element (218), which upper element is pivotally connected to an upwardly extending support (217) by which a distributor member (71) is arranged on the carrier (68), said support comprising two upwardly extending portions (220, 214), which are pivotal relative to each other about a transverse axis, the lower most portion (214) being connected to the carrier (68), the adjusting element (233) being arranged to rotate the carrier (68), such that upon actuation of the adjusting element (233) the seed delivery members (73, 74) are pivoted upwardly away from a working position near soil level, and the distributor member is pivoted from an upright working position rearwardly and downwardly relative to the carrier (68).

2. A soil cultivating machine as claimed in claim 1, characterized in that the carrier (68) is coupled to the frame (2) and the pivotal action occurs automatically.

3. A soil cultivating machine as claimed in claim ?, characterized in that the upper element (218) constructed as a spacer element is arranged pivotally between the frame (2) and the upper portion (220) of the holder (217) of a distributor member (71).

4. A soil cultivating machine as claimed in any one of the preceding claims, characterized in that via a four-bar linkage (200) which approaches a parallelogram the frame is connected by means of two arms (11, 12) which predominantly extend in the direction of operative travel, to a main frame (127 - 129) which is coupable to a tractor.

5. A soil cultivating machine as claimed in claim 4, characterized in that the centre-to-centre distance between the pivot shafts of the upper arm (11) is less within a range from 5 to 18%, and preferably 10%, than the corresponding distance for the lower arm (12), and in that the upper arm (11) extends in such a way as to form a curve, and that, when the upper arm (11) bears on a stop (15), the stop (15) is then located on the centre line between the pivot shafts of the upper arm (11).

6. A soil cultivating machine as claimed in claim 4 or 5, characterized in that the leading pivot shafts of the four-bar linkage (20) are located before an imaginary vertical plane of contact with the trailing side of a main frame beam (150), to which the four-bar linkage (200) is connected, and that the rear and lower pivot shaft of the four-bar linkage (200) is disposed near the leading edge of a frame portion (2).

7. A soil cultivating machine as claimed in any one of claims 4 - 6, characterized in that, in a transport position, the arms (11, 12) of the four-bar linkage (200) enclose in the rearward direction an acute angle with a horizontal, which angle is preferably approximately 45°.

8. A soil cultivating machine as claimed in any one of the preceding claims, characterized in that the main frame (127 - 129) comprises a central main frame portion (127) for coupling to a tractor and two peripheral main frame portions (128, 129) which are arranged one each at one side thereof and can each be pivoted about a pivot shaft (201) extending in the direction of travel to and at least predominantly upwardly directed transport position with the aid of a hydraulic adjusting cylinder (232).

9. A soil cultivating machine as claimed in one or more of the preceding claims, characterized in that the hydraulic circuit (240) of the adjusting cylinders (232) for the main frame (127 - 129) is connected via non-return valves to the hydraulic circuit (235) for the adjusting cyinders (233) which act on the carrier (68) of the seed drill (5), the arrangement being such that on activation of the adjusting cylinders (232) for adjusting the machine to the transport position, the adjusting cylinders (233) for the seed drill are then also automatically energized.

## Patentansprüche

1. Bodenbearbeitungsmaschine mit mindestens zwei Rahmenteilen (2), die im Betrieb horizontal und im wesentlichen senkrecht zur Arbeitsrichtung ausgerichtet und in eine Transportlage schwenkbar sind, in der die Rahmenteile in Aufwärtsrichtung nebeneinander angeordnet sind, wobei an jedem der Rahmenteile (2) Bodenbearbeitungsglieder (3) angeordnet sind, und wobei an jeden Rahmenteil mittels einer schwenkbaren Verbindungsvorrichtung (202) eine pneumatische Drillmaschine (68 bis 74) angeschlossen ist, die an einen Träger (68) angeschlossene Saatzuführglieder (73, 74) zum Einbringen von Saatgut in den Boden und mindestens einen Verteiler (71) aufweist, wobei die Maschine ferner ein Stellglied (233) zum Drehen des Trägers (60) aufweist,
dadurch gekennzeichnet, daß die schwenkbare Verbindungsvorrichtung (202) ein unteres Element (87) und ein oberes Element (218) aufweist, wobei das obere Element mit einer aufwärts gerichteten Stütze (217) schwenkbar verbunden ist, mittels der ein Verteiler (71) am Träger (68) angebracht ist, wobei die Stütze zwei aufwärts gerichtete Teile (220, 214) aufweist, die relativ zueinander um eine Querachse schwenkbar sind, wobei der untere Teil (214) mit dem Träger (68) verbunden ist, wobei das Stellglied (233) zum Drehen des Trägers (68) dient, derart, daß die Saatzuführglieder (73, 74) bei Betätigung des Stellgliedes (233) aus einer Arbeitslage nahe der Bodenoberfläche nach oben geschwenkt werden und der Verteiler aus einer aufrechten Arbeitslage relativ zu dem Träger (68) nach hinten und unten geschwenkt wird.

2. Bodenbearbeitungsmaschine nach Anspruch 1,
dadurch gekennzeichnet, daß der Träger (68) mit dem Rahmen (2) verbunden ist und der Schwenkvorgang automatisch erfolgt.

3. Bodenbearbeitungsmaschine nach Anspruch 2,
dadurch gekennzeichnet, daß das als Distanzelement ausgeführte obere Element (218) schwenkbar zwischen dem Rahmen (2) und dem oberen Teil (220) des Halters (217) eines Verteilers (71) angeordnet ist.

4. Bodenbearbeitungsmaschine nach einem der vorhergehenden Ansprüche,
dadurch gekennzeichnet, daß der Rahmen über ein einem Parallelogramm ähnelndes Gelenkviereck (200) mittels zweier Arme (11, 12), die sich überwiegend in Arbeitsrichtung erstrecken, mit einem an einen Schlepper anschließbaren Hauptrahmen (127 bis 129) verbunden ist.

5. Bodenbearbeitungsmaschine nach Anspruch 4,
dadurch gekennzeichnet, daß der Abstand von Mitte zu Mitte zwischen den Schwenkachsen des oberen Armes (11) um 5 bis 18 % und vorzugsweise um 10 % geringer ist als der entsprechende Abstand des unteren Armes (12), und daß der obere Arm (11) gekrümmt ist, und daß bei Anliegen des oberen Armes (11) an einem Anschlag (15) der Anschlag (15) auf der Mittellinie zwischen den Schwenkachsen des oberen Armes (11) liegt.

6. Bodenbearbeitungsmaschine nach Anspruch 4 oder 5,
dadurch gekennzeichnet, daß die vorderen Schwenkachsen des Gelenkviereckes (20) vor einer gedachten vertikalen Kontaktfläche mit der Rückseite eines Hauptrahmenbalkens (150) liegen, mit dem das Gelenkviereck (200) verbunden ist, und daß die hintere und untere Schwenkachse des Gelenkviereckes (200) nahe der Vorderkante eines Rahmenteiles (2) angeordnet ist.

7. Bodenbearbeitungsmaschine nach einem der Ansprüche 4 bis 6,
dadurch gekennzeichnet, daß die Arme (11, 12) des Gelenkviereckes (200) in einer Transportlage in Rückwärtsrichtung mit einer Horizontalen einen spitzen Winkel bilden, der vorzugsweise etwa 45° beträgt.

8. Bodenbearbeitungsmaschine nach einem der vorhergehenden Ansprüche,
dadurch gekennzeichnet, daß der Hauptrahmen (127 bis 129) ein mittleres Hauptrahmen-Teilstück (127) zum Anschluß an einen Schlepper und zwei äußere Hauptrahmen-Teilstücke (128, 129) aufweist, die jeweils auf einer Seite angeordnet sind und mit Hilfe eines hydraulischen Stellzylinders (232) jeweils um eine sich in Arbeitsrichtung erstreckende Schwenkachse (201) in eine zumindest überwiegend aufwärts gerichtete Transportlage zu schwenken sind.

9. Bodenbearbeitungsmaschine nach einem oder mehreren der vorhergehenden Ansprüche,
dadurch gekennzeichnet, daß der Hydraulikkreis (240) der Stellzylinder (232) für den Hauptrahmen (127 bis 129) über Rückschlagventile mit dem Hydraulikkreis (235) für die Stellzylinder (233) verbunden ist, die den Träger (68) der Drillmaschine (5) betätigen, wobei die Anordnung so getroffen ist, daß bei Betätigung der Stellzylinder (232) zum Einstellen der Maschine in die Transportlage die Stellzylinder (233) für die Drillmaschine ebenfalls automatisch betätigt werden.

## Revendications

1. Machine pour cultiver le sol comprenant au moins deux parties de châssis (2) alignées horizontalement et sensiblement perpendiculaires au sens de marche du travail pendant le travail et pivotantes vers une position de transport dans laquelle les parties de châssis sont disposées côte à côte en sens vers le haut, dans chacune desquelles parties de châssis (2) sont logés des organes de travail du sol (3) et à chacune des quelles un semoir pneumatique (68 - 74) est couplé au moyen d'une structure de liaison pivotante (202), lequel semoir comporte, reliés à un élément porteur (68), des organes semeurs (73, 74) pour déposer des semences dans le sol, et au moins un organe distributeur (71), la machine comprenant en outre un élément de réglage (233) pour faire tourner l'élément porteur (68), caractérisée en ce que la structure de liaison pivotante (202) comprend un élément inférieur (87) et un élément supérieur (218), lequel élément supérieur est relié de manière pivotante à un support (217) s'étendant vers le haut, par lequel un organe distributeur (71) est disposé sur l'élément porteur (68), ledit support comprenant deux parties (220, 214) s'étendant vers le haut, qui sont pivotantes, l'une par rapport à l'autres autour d'un axe transversal, la partie la plus basse (214) étant reliée à l'élément porteur (68), l'élément de réglage (233) étant disposé pour faire tourner l'élément porteur, de telle sorte qu'en mettant en action l'élément de réglage (233) les organes semeurs (73, 74) pivotent vers le haut en s'éloignant d'une position de travail près du sol, et l'organe distributeur pivote, à partir d'une position verticale, vers l'arrière et vers le bas par rapport à l'élément porteur (68).

2. Machine pour cultiver le sol selon la revendication 1, caractérisée en ce que l'élément porteur (68) est couplé au châssis (2) et le pivotement a lieu automatiquement.

3. Machine pour cultiver le sol selon la revendication 2, caractérisée en ce que l'élément supérieur (218) construit comme un élément espaceur est monté pivotant entre le châssis (2) et la partie supérieure (220) du support (217) d'un organe distributeur (71).

4. Machine pour cultiver le sol selon l'une quelconque des revendications précédentes, caractérisée en ce que le châssis est relié, par une liaison à quatre barres (200) ayant à peu près la forme d'un parallélogramme, au moyen de deux bras (11, 12) qui s'étendent essentiellement dans le sens de marche du travail, à un châssis principal (127 - 129) pouvant être couplé à un tracteur.

5. Machine pour cultiver le sol selon la revendication 4, caractérisée en ce que la distance entre les axes des pivots du bras supérieur (11) est moindre, dans l'ordre de 6 à 18%, de préférence de 10%, que la distance correspondante pour le bras inférieur (12) et en ce que, lorsque le bras supérieur (11) porte sur une butée (15), la butée (15) est alors située sur la ligne joignant les axes des pivots du bras supérieur (11).

6. Machine pour cultiver le sol selon la revendication 4 ou 5, caractérisée en ce que les pivots antérieurs de la liaison à quatre barres (200) sont situés devant un plan vertical imaginaire de contact avec le côté postérieur d'une poutre (150) du châssis principal à laquelle la liaison à quatre barres (200) est reliée, et en ce que le pivot postérieur et inférieur de la liaison à quatre barres (200) est disposé près du bord antérieur d'une partie de châssis (2).

7. Machine pour cultiver le sol selon l'une quelconque des revendications 4 à 6, caractérisée en ce que, dans une position de transport, les bras (11, 12) de la liaison à quatre barres (200) forment, en direction vers l'arrière, un angle aigu avec une horizontale, lequel angle est, de préférence, d'environ 450.

8. machine pour cultiver le sol selon l'une quelconque des revendications précédentes, caractérisée en ce que le châssis principal (127 - 129) comprend une partie centrale (127) du châssis principal, pour le couplage à un tracteur, et deux parties périphériques (128, 129) du châssis principal qui sont disposées de part et d'autre de la partie centrale et qui peuvent pivoter chacune, autour d'un arbre de pivotement (201) s'étendant dans le sens de marche de travail, vers une position de travail dirigée, au moins principalement, vers le haut, à l'aide d'un vérin hydraulique de réglage.

9. Machine pour cultiver le sol selon une ou plusieurs des revendications précédentes, caractérisée en ce que le circuit hydraulique (240) des vérins de réglage pour le châssis principal (127 - 129) est relié par des soupapes de retenue au circuit hydraulique (235) des vérins de réglage (233) qui agissent sur l'élément porteur (68) du semoir (5), l'agencement étant tel qu'en mettant en action les vérins de réglage (232) pour régler la machine vers la position de 25 transport, les vérins de réglage (233) du semoir sont alors, eux aussi, mis en action automatiquement.
